# EUROPÄISCHE PATENTANMELDUNG

(11) **EP 1 103 837 A2**
(43) Veröffentlichungstag der Anmeldung: **30.05.2001**
(21) Anmeldenummer: 00123705.6
(22) Anmeldetag: 31.10.2000
(51) Int. Cl.: G02C 5/16

(54) **Brillenbügel**

(30) Priorität: 02.11.1999 DE 29919120 U
(71) Anmelder: Rademacher, Herbert, 47441 Moers (DE)
(72) Erfinder: Rademacher, Herbert, 47441 Moers (DE)
(74) Vertreter: Funken, Josef, Dipl.-Ing.

(57) **Zusammenfassung**

Ein Brillenbügel, der gelenkig mit dem Steg der Brillenfassung verbunden ist und aus einem Mittelteil sowie einem sich an dem Mittelteil anschließenden Ohrbügel besteht, welch letzterer auf dem Ohr des Brillenträgers aufliegt und hinter dessen Ohr gegen seinen Kopf anliegt, ist so ausgebildet, daß der Ohrbügel federnd ausgebildet ist und dessen Federkraft oder Rückstellkraft hinter dem Ohr des Brillenträgers gegen dessen Kopf wirkt.

## Beschreibung

Die Erfindung betrifft einen Brillenbügel, der gelenkig mit dem Steg der Brillenfassung verbunden ist und aus einem Mittelteil sowie einem sich an dem Mittelteil anschließenden Ohrbügel besteht, welch letzterer auf dem Ohr des Brillenträgers aufliegt und hinter dessen Ohr gegen seinen Kopf anliegt.

Der ordnungsgemäße Sitz einer Brille am Kopf und auf der Nase des Brillenträgers ist im allgemeinen problematisch. Entweder drücken die beiden an den Enden der Brillenbügel befindlichen Ohrbügel gegen den Kopf und verursachen Schmerzen oder die Ohrbügel sind zu locker, so daß die Brille auf der Nase des Brillenträgers zuweit nach vorn verrutscht, so daß die gewünschte Optik nicht mehr vorhanden ist.

Aus der DE 28 25 712 A1 ist ein Brillenbügel mit einem Scharnier und mit einem metallischen steifen Bügelsteg mit Hochkant-I-Profil und mit einer ohne plastische Verformung über den Bügelaufgang hinaus den Brillenbügel an Verschwenken gestattende Federvorrichtung, wobei die eine Scharnierhälfte mit einem Bügelstegstummel starr verbunden ist. Am Bügelstegstummel ist eine Brücke mit ihrem einen Endbereich starr befestigt, die als Blattfeder ausgebildet ist. Die Blattfeder hat dabei eine wirksame Länge von mindestens dem Zehnfachen ihrer Dicke, ist aber wesentlich kürzer als die Entfernung zwischen Scharnier und Anfang des Ohrbereiches des Brillenbügels. Auf der wirksamen Länge der Brücke ist das I-Profil ausgespart und ihr anderer Endbereich ist mit der Fortsetzung des I-Profils starr befestigt.

In der DE 26 04 968 B2 ist ein Brillengestellt mit einem Mittelteil und zwei gelenkig am Mittelteil angebrachten Bügeln beschrieben, die jeweils einen steifen Bügelendabschnitt zur Festlegung am Kopf des Benutzers und zusätzlich ein das Ohr des Benutzers hintergreifendes Sicherungselement umfassen. Hierbei ist das Sicherungselement als elastischer, hinter dem Ohr herumlegbarer Federbügel ausgebildet. Jeder Bügel weist eine in seiner Längsrichtung verlaufende Bohrung auf, in der der zugehörige Federbügel an seinem einen Ende verankert ist und in die der Federbügel vollständig einschiebbar ist. Hierbei handelt es sich um ein Brillengestell, bei dem der Federbügel herausgezogen und hinter das Ohr positioniert werden kann. Das ist sinnvoll für Brillen, bei denen eine relativ große Gefahr besteht, daß sie verloren gehen können, wie insbesondere bei Sportbrillen, Skibrillen und dergleichen. Das hat jedoch nichts mit dem einleitend dargestellten Problem zu tun.

Eine ordnungsgemäße und in gewünschter Weise am Ohr und auf der Nase sitzende und unverrückbar tragbare Brille ist eher die Ausnahme. Hierüber wird zwar keine Statistik geführt, es ist aber zu vermuten, daß die meisten Brillen nicht ordnungsgemäß sitzen. Sie rutschen entweder auf der Nase nach vorn und verändern die erforderliche Optik, oder aber sie drücken hinter dem Ohr und verursachen Kopfschmerzen.

Der Erfindung liegt die Aufgabe zugrunde, einen Brillenbügel so auszubilden, daß die zugehörige Brille sowohl hinter den Ohren fest sitzt, ohne dort zu drücken, als auch auf der Nase festsitzt, ohne nach vorn zu verrutschen, also die zugehörige Brille einen gewollten und festen Sitz hat, der sich nicht ändert.

Diese Aufgabe wird erfindungsgemäß dadurch gelöst, daß der Ohrbügel federnd ausgebildet ist und dessen Federkraft oder Rückstellkraft hinter dem Ohr des Brillenträgers gegen dessen Kopf wirkt.

Auf diese Weise gelangt man zu einem Brillenbügel, dessen zugehörige Brille sowohl hinter den Ohren festsitzt, ohne dort zu drücken, als auch auf der Nase festsitzt, ohne nach vorn zu verrutschen. Eine solche Brille hat einen gewollten und festen Sitz, der sich nicht ändert.

Zweckmäßigerweise ist der Ohrbügel insgesamt elastisch ausgebildet.

Der Brillenbügel kann zweckmäßig auch so ausgebildet sein, daß der Ohrbügel nur im Bereich des freien Endes des Ohrbügels elastisch ausgebildet ist.

In vorteilhafter Ausgestaltung der Erfindung kann vorgesehen sein, daß im Bereich des freien Endes des Ohrbügels eine sich am Ohrbügel anschließende Feder angeordnet ist, die vom Material des Ohrbügels ummantelt ist.

Außerdem empfiehlt es sich, daß ein Nachrüstsatz mit einer Feder in einer einseitig offenen Ummantelung vorgesehen ist, der auf das Ende des Ohrbügels schiebbar ist.

Die Feder ist zweckmäßig als Stahlblattfeder ausgebildet.

Des weiteren empfiehlt es sich, den Brillenbügel so auszubilden, daß ein Nachrüstsatz als insgesamt elastische stabförmige Verlängerung vorgesehen ist, die eine an einem Ende offene Bohrung aufweist, mit der die Verlängerung auf das Ende des Ohrbügels schiebbar ist.

Die der Erfindung zugrunde liegende Aufgabe wird auch dadurch gelöst, daß im Bereich des Überganges des Mittelteils in den Ohrbügel ein mit einer Feder belastetes Scharnier vorgesehen ist, dessen Federkraft oder Rückstellkraft hinter das Ohr des Brillenträgers gegen dessen Kopf wirkt.

In der Zeichnung sind drei Ausführungsbeispiele eines erfindungsgemäß ausgebildeten Brillenbügels und zwei Nachrüstsätze für einen Brillenbügel dargestellt. Es zeigt
- Figur 1: eine erste Ausführung eines Brillenbügels,
- Figur 2: eine zweite Ausführung eines Brillenbügels,
- Figur 3: einen Nachrüstsatz gemäß einer ersten Ausführungsform für einen Brillenbügel,
- Figur 4: einen Nachrüstsatz gemäß einer zweiten Ausführungsform für einen Brillenbügel,
- Figur 5: eine dritte Ausführungsform eines Brillenbügels und
- Figur 6: eine Draufsicht auf den Brillenbügel gemäß Figur 5.

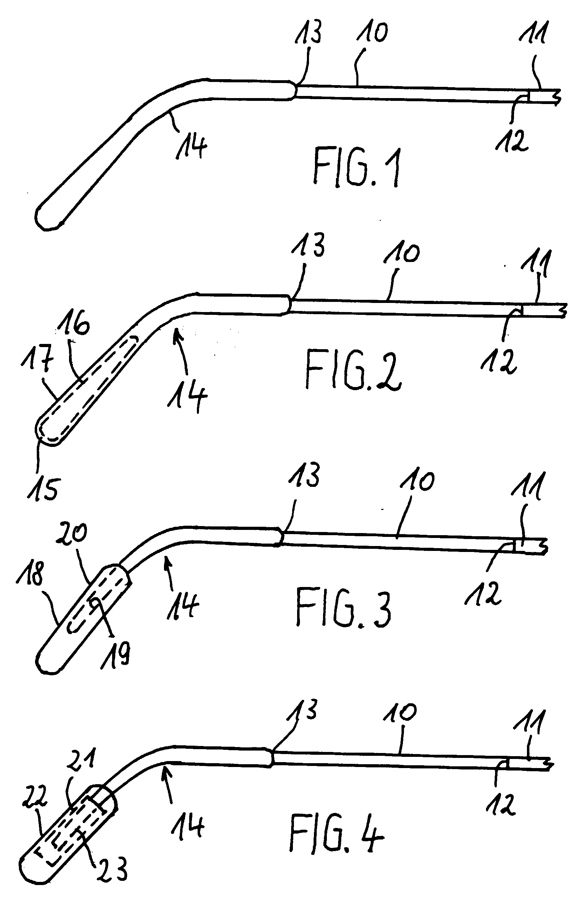

Der in Figur 1 dargestellte Brillenbügel besteht aus einem Mittelteil 10, welches auf der rechten Seite gemäß der Darstellung in Figur 1 an dem Steg 11 der in der Zeichnung im einzelnen nicht dargestellten Fassung der Brillenträger über ein Gelenk 12 verbunden ist, und an dem sich links gemäß der Darstellung in Figur 1 an der Verbindungsstelle 13 ein Ohrbügel 14 anschließt. Der Ohrbügel 14 ist federnd ausgebildet und besteht aus einem insgesamt federelastisch wirkenden Material, welches überall so abgerundet ist, wie auch bekannte Ohrbügel abgerundet sind, damit es nicht zu Hautverletzungen kommt. Es kann sich hierbei um einen entsprechend elastischen Kunststoff handeln oder um einen entsprechend elastischen Gummi oder dergleichen.

Das in Figur 2 dargestellte Ausführungsbeispiel unterscheidet sich von demjenigen gemäß Figur 1 nur durch den Ohrbügel 14. Der Ohrbügel 14 enthält im Bereich des freien Endes 15 eine Feder 16, die durch eine Hülle 17 umhüllt bzw. ummantelt ist. Bei der Feder 16 handelt es sich zweckmäßig um eine Stahlblattfeder.

In Figur 3 ist auf den Ohrbügel 14 eine längliche Verlängerung aus elastischem Material mit einer Bohrung 19 auf das freie Ende 20 des Ohrbügels 14 geschoben. Diese Verlängerung besteht aus elastischem Kunststoff oder elastischem Gummi oder dergleichen.

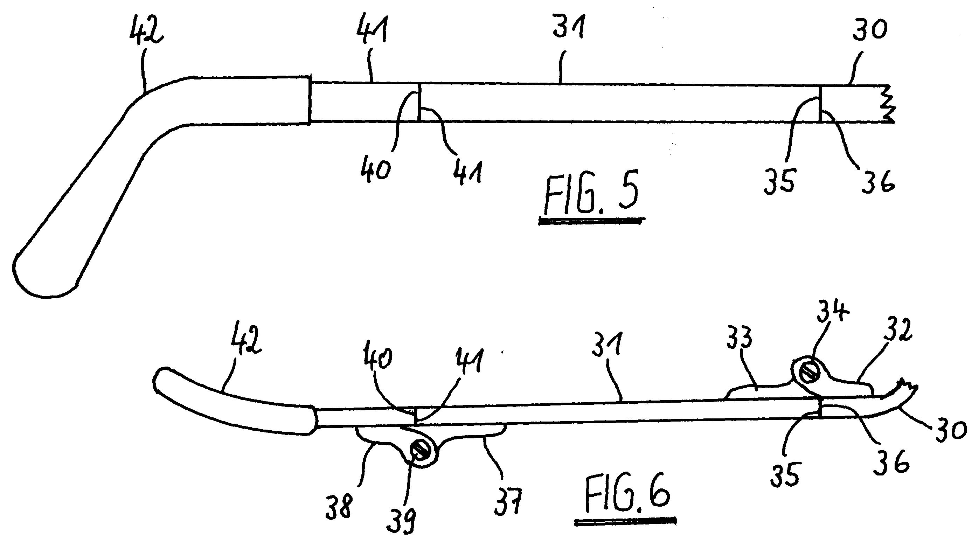

Gemäß der in Figur 4 dargestellten Ausführungsform besteht der Nachrüstsatz aus einer Feder 21, die durch eine Ummantelung umhüllt ist und an ihrem einen Ende eine Bohrung aufweist, mit der der Nachrüstsatz auf das freie Ende des Ohrbügels 14 zu schieben ist.

In den Figuren 5 und 6 ist ein von den Ausführungsbeispielen der Figuren 1 bis 4 abweichendes Ausführungsbeispiel dargestellt. An dem Steg 30 schließt sich das Mittelteil 31 über ein Scharnier an, welches aus einer ersten Scharnierhälfte 32 und einer zweiten Scharnierhälfte 33 sowie einer Schraube 34 besteht. Hierbei ist die nach vorn gerichtete Stirnfläche 35 und die nach hinten gerichtete Stirnfläche 36 gebildet. Am anderen Ende des Mittelteiles 31 sind eine erste Scharnierfläche 37 und eine zweite Scharnierfläche 38 sowie eine Schraube 39 vorgesehen. Bei dem hierdurch gebildeten Gelenk, welches durch eine Feder belastet ist, ist die nach vorn gerichtete Stirnfläche 40 und die nach hinten gerichtete Stirnfläche 41 gebildet. Daran schließt sich ein üblicher Ohrbügel 42 an, der unter der Federkraft des Gelenks 37, 38, 39 steht. Hierbei sind Änderungen am Ohrbügel selbst nicht erforderlich, weil durch die Feder 37, 38, 39 der Ohrbügel 42 genügend fest hinter dem Ohr am Kopf des Brillenträgers anliegt.

## Patentansprüche

1. Brillenbügel, der gelenkig mit dem Steg der Brillenfassung verbunden ist und aus einem Mittelteil sowie einem sich an dem Mittelteil anschließenden Ohrbügel besteht, welch letzterer auf dem Ohr des Brillenträgers aufliegt und hinter dessen Ohr gegen seinen Kopf anliegt,
**dadurch gekennzeichnet**,
daß der Ohrbügel federnd ausgebildet ist und dessen Federkraft oder Rückstellkraft hinter dem Ohr des Brillenträgers gegen dessen Kopf wirkt.

2. Brillenbügel nach Anspruch 1, dadurch gekennzeichnet, daß der Ohrbügel insgesamt elastisch ausgebildet ist.

3. Brillenbügel nach Anspruch 1, dadurch gekennzeichnet, daß der Ohrbügel nur im Bereich des freien Endes des Ohrbügels elastisch ausgebildet ist.

4. Brillenbügel nach einem der vorhergehenden Ansprüche, dadurch gekennzeichnet, daß im Bereich des freien Endes des Ohrbügels eine sich am Ohrbügel anschließende Feder angeordnet ist, die vom Material des Ohrbügels ummantelt ist.

5. Brillenbügel nach einem der vorhergehenden Ansprüche, dadurch gekennzeichnet, daß ein Nachrüstsatz mit einer Feder in einer einseitig offenen Ummantelung vorgesehen ist, der auf das Ende des Ohrbügels schiebbar ist.

6. Brillenbügel nach Anspruch 5, dadurch gekennzeichnet, daß als Feder eine Stahlblattfeder vorgesehen ist.

7. Brillenbügel nach einem der vorhergehenden Ansprüche, dadurch gekennzeichnet, daß ein Nachrüstsatz als insgesamt elastische stabförmige Verlängerung vorgesehen ist, die eine an einem Ende offene Bohrung aufweist, mit der die Verlängerung auf das Ende des Ohrbügels schiebbar ist.

8. Brillenbügel, der gelenkig mit dem Steg der Brillenfassung verbunden ist und aus einem Mittelteil sowie einem sich an dem Mittelteil anschließenden Ohrbügel besteht, welch letzterer auf dem Ohr des Brillenträgers aufliegt und hinter dessen Ohr gegen seinen Kopf anliegt,
**dadurch gekennzeichnet**,
daß im Bereich des Überganges des Mittelteils in den Ohrbügel ein mit einer Feder belastetes Scharnier vorgesehen ist, dessen Federkraft oder Rückstellkraft hinter das Ohr des Brillenträgers gegen dessen Kopf wirkt.
